**Europäisches Patentamt**

**European Patent Office**

**Office européen des brevets**

(11) Publication number: **0 203 230**
**B1**

(12) **EUROPEAN PATENT SPECIFICATION**

(45) Date of publication of patent specification: **16.08.90**

(21) Application number: **85303683.8**

(22) Date of filing: **24.05.85**

(51) Int. Cl.⁵: **C 06 B 21/00, B 01 F 7/22**

(54) **Apparatus and method for manufacture and delivery of blasting agents.**

(43) Date of publication of application:
**03.12.86 Bulletin 86/49**

(45) Publication of the grant of the patent:
**16.08.90 Bulletin 90/33**

(84) Designated Contracting States:
**AT BE CH DE FR GB LI SE**

(56) References cited:
**GB-A- 16 836**
**GB-A-2 123 308**
**GB-A-2 126 910**
**US-A-1 829 722**
**US-A-3 303 738**
**US-A-4 102 240**

**The file contains technical information
submitted after the application was filed and
not included in this specification**

(73) Proprietor: **IRECO INCORPORATED**
**Eleventh Floor Crossroads Tower
Salt Lake City Utah 84144 (US)**

(72) Inventor: **Larsen, Raymond D.**
**1451 East 8685 South
Sandy Utah, 84092 (US)**
Inventor: **Lawrence, Larry D.**
**2563 South 3210 South
Salt Lake City Utah, 84109 (US)**
Inventor: **Sudweeks, Walter B.**
**734 South Woodmore Drive
Orem Utah, 84058 (US)**

(74) Representative: **Boon, Graham Anthony et al
Elkington and Fife Beacon House 113 Kingsway
London, WC2B 6PP (GB)**

Courier Press, Leamington Spa, England.

## Description

The present invention relates to a method and apparatus for formulating blasting agents and delivering them in bulk into a borehole or other receptacle. More specifically, the invention relates to a method and apparatus for the "on-site" formulating and delivery of water-in-oil emulsion blasting agents. By "on-site" is meant that both the formulating and delivery operations are conducted at the blasting location or site. This means that the blasting agents are "site-mixed" in a movable apparatus as opposed to being "plant-mixed" at a remotely located, stationary facility. The advantages of this "site-mixed system" are described below.

Slurry explosives or blasting agents are used commonly in the mining industry. They generally contain a thickened oxidizer salt solution that forms a continuous aqueous phase throughout which is dispersed solid and/or liquid fuels, sensitizers, density reducing agents and other ingredients. Equipment for the bulk delivery of these blasting agents have been developed. For example, US-A-3,303,738 and 3,380,333 disclose a method and apparatus for the bulk delivery of slurry blasting agents into a borehole. The disclosed apparatus is a heavy duty truck upon which is housed equipment for storage and transportation of blasting agent ingredients, for the blending and mixing of such ingredients into a slurry blasting agent and for the pumping of the blended slurry blasting agent into a borehole. Since the truck is self-contained with respect to the equipment for formulating and pumping the slurry blasting agent, it can be driven to the desired blasting site and there operated so as to manufacture and deliver the slurry blasting agent on-site and into a borehole. Thus, the slurry blasting agent ingredients, which are not detonatable by themselves, can be transported safely by the truck, and a detonatable blasting agent is formed only immediately prior to delivery of the agent into a borehole for subsequent detonation. The inherent safety advantages of this system are obvious.

Another advantage of this "site-mixed" "pump-truck" system is that the proportion of the ingredients being blended can be varied continuously or step-wise in a predetermined manner, and thus the composition of the slurry blasting agent can be tailored to meet varying blasting conditions, even within a single borehole. Other truck systems which simply repump or extrude slurry blasting agents previously formulated at a stationary facility do not have this advantage or the previously described safety advantage. The site-mixed system has received world-wide acceptance in many different types of mines and mining conditions. US-A-4,102,240 also discloses a site-mixed system.

In contradistinction to slurry blasting agents, emulsion explosives or blasting agents have a continuous oil phase rather than a continuous aqueous phase. Droplets of an aqueous solution of oxidizer salt are dispersed or emulsified throughout the continuous oil phase and, as desired, solid ingredients such as undissolved oxidizer salt, fuel, or density reducing agents also are dispersed throughout the continuous oil phase. These blasting agents are referred to herein as water-in-oil emulsion blasting agents.

Water-in-oil emulsion blasting agents are known in the art (see, for example, US-A-4,141,767; 4,110,134; 3,447,978 and 3,161,551). Water-in-oil emulsion blasting agents are found to have certain distinct advantages over conventional slurry blasting agents, as explained in US-A-4,141,767. The above patents describe certain specialized methods for the manufacture of water-in-oil emulsion blasting agents, and a method and apparatus for the manufacture of such agents is described in US-A-4,008,108 and 4,138,281. GB-A-2,126,910 describes a method for the on-site manufacture and the delivery of a water-in-oil emulsion blasting agent by means of static mixers.

Finally, GB-A-16,836 and US-A-1,829,722 describe mixers with moving parts.

The present invention can be described as a site-mixed system for water-in-oil emulsion blasting agents which can be either cap sensitive or non-cap sensitive. This invention combines the above-described advantages of a site-mixed system and of water-in-oil emulsion blasting agents. Despite the advantages of combining a site-mixed system with a water-in-oil emulsion blasting agent, such combination has not been achieved heretofore.

The invention provides an apparatus for the onsite bulk manufacture and delivery of a pumpable blasting agent, the apparatus comprising a movable base on which is housed a container for an oxidizer salt solution, means for delivering the blasting agent from the apparatus, and a conduit through which the blasting agent can be delivered into a borehole or other receptacle, characterised in that the base further houses a container for a solution of emulsifier and liquid organic fuel or individual containers for each ingredient, means for combining the oxidizer salt solution, emulsifier and liquid organic fuel to form a fluid mixture thereof, and a blender for blending the fluid mixture of oxidizer salt solution, emulsifier and liquid organic fuel to form a water-in-oil emulsion blasting agent.

The invention also provides a blender for blending a fluid mixture of ingredients of a water-in-oil emulsion blasting agent into an emulsion phase, which blender comprises a housing having an inlet and an outlet, a shaft rotatably mounted within the housing, a plurality of blades affixed to and extending from the shaft and spaced apart along the axis of the shaft, a plurality of stators rigidly mounted within the housing and interposed in some or all of the spaces between the blades, and means for rotating the shaft and blades so as to blend the fluid mixture into the emulsion phase.

The invention further provides a method for the manufacture and bulk delivery of water-in-oil emulsion blasting agents comprising forming an oxidizer salt solution at a temperature above the salt crystallization temperature, combining the salt solution with a liquid organic fuel and an emulsifier to form a fluid mixture thereof, blending the fluid mixture to form a water-in-oil emulsion blasting agent wherein the step of blending includes shearing the fluid mixture with a combination of stators and rotatable blades, and delivering the emulsion blasting agent directly into a borehole or other receptacle.

In the accompanying drawings:

FIG. 1 is a flow diagram illustrating the method and apparatus of this invention;

FIG. 2 is a side elevation of a pump truck in partial schematic form;

FIG. 3 is a schematic rear view of the truck shown in FIG. 2;

FIG. 4 is a side elevation, partially broken away, of the blender;

FIG. 5 is a cross sectional view taken along plane A—A of FIG. 4; and

FIG. 6 is a side elevation, partially broken away, of the blending and mixing means shown in FIGS. 2 and 3.

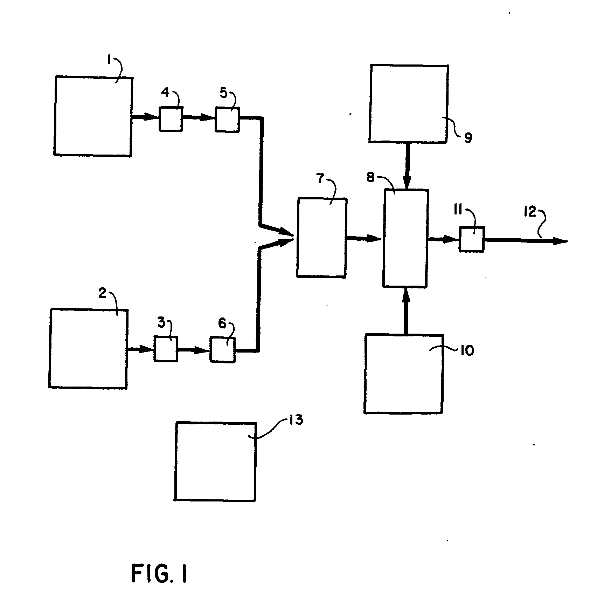

Fig. 1 is a flow diagram illustrating an embodiment of the invention. The apparatus comprises a container 1 for an oxidizer salt solution, a container 2 for a solution of liquid organic fuel and emulsifier, pumps 3 and 4, solution flow meters 5 and 6, a blender 7, a mixer 8, containers 9 and 10 (additional containers can be used) for dry, particulate ingredients, a delivery pump 11, a delivery conduit 12 and a power source 13. Not shown is a movable base upon which the apparatus preferably is housed. In operation, the solutions in containers 1 and 2 are pumped by pumps 3 and 4 through solution flow meters 5 and 6 into blender 7 in which the solutions are blended into an emulsion blasting agent. Optionally, dry, particulate ingredients from containers 9 and 10 are then mixed into the emulsion blasting agent to form the final water-in-oil emulsion blasting agent which is then pumped by delivery pump 11 through delivery conduit 12 into a borehole or other receptacle. Power source 13 provides power for all dynamic operations. The invention and certain preferred embodiments will be described in more detail below.

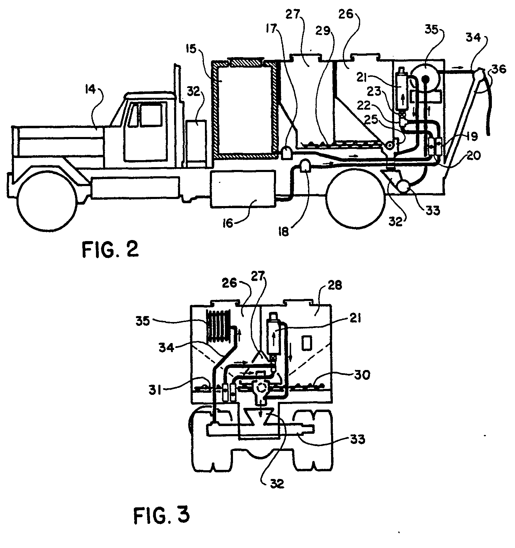

Fig. 2 is a side schematic view of a preferred embodiment of the invention. A movable base 14 houses the apparatus. Although shown in the drawing as a heavy duty truck, the movable base could be a skid, trailer, light duty truck, or other means. The movable base need not be capable of its own locomotion, as is the truck shown in the drawing, but a self-locomotive base is generally more mobile. The size and type of the base can depend upon the particular blasting application. For example, in underground applications, the base and housed apparatus may need to be relatively compact. In these applications, the movable base could be a small trailer or skid or a light duty truck. For open pit blasting applications, the heavy duty truck shown in Fig. 2 is desirable because of its large volume capacity. Numerous types of movable bases could be employed by those skilled in the art.

An oxidizer salt solution container 15 is mounted on the movable base 14. The solution is aqueous and the dissolved oxidizer salt is that or a combination of those commonly employed in water-in-oil emulsion blasting agents (see, for example, US-A-4,141,767). A means (not shown) for maintaining the oxidizer salt solution at a temperature above its crystallization temperature is employed to keep the salts in solution. One means is simply to insulate the container, but a heating element could be used if necessary or desired.

Container 16 is for a solution of liquid organic fuel and emulsifier. Although these ingredients may be kept in separate containers, they are preferably combined into a single solution. The fuel and emulsifier are of the type commonly employed in the art. If desired, the solution container, or containers, may be heated for fluidity and compatibility with the oxidizer salt solution.

The solutions in containers 15 and 16 are pumped by pumps 17 and 18, respectively, from the containers through solution flow meters 19 and 20. The pumps can be types conventionally employed. Typical pumps include positive displacement pumps such as a Waukesha (0—150 gpm) for the oxidizer salt solution and a Delta (0—7 gpm) for the fuel and emulsifier solution. The solution flow meters can be standard tube and float rotameters or other flow monitoring means can be used. Solution flow can be adjusted manually or automatically for predetermined flow rates.

The inorganic oxidizer salt solution and the liquid organic fuel and emulsifier solution (or separate streams of fuel and of an emulsifier solution) are combined prior to blending in a blender 21. As shown in Fig. 2, the solutions are combined to form a fluid mixture in a T-joint 22 prior to entering the blender through inlet 23. However, the solutions can be combined in other ways such as in blender 21 itself, in which instance the two solution flow lines (not numbered) from meters 19 and 20 would enter blender 21 through separate inlets, preferably located in either the bottom or lower sides of blender 21.

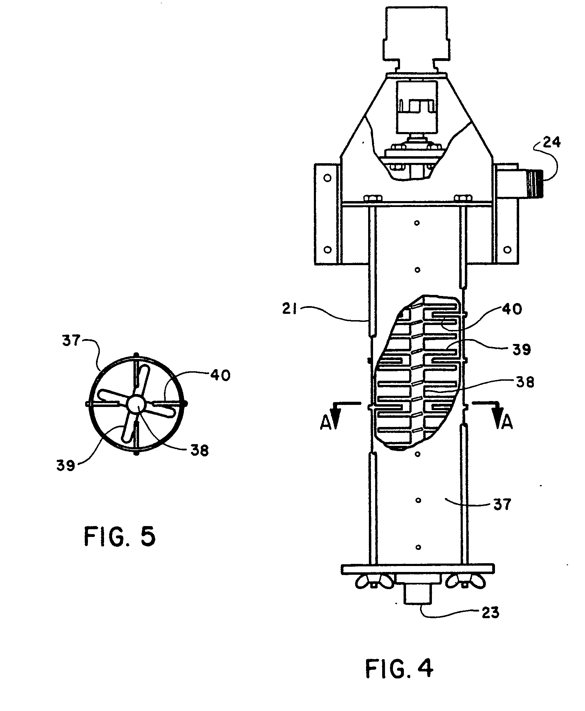

Blender 21 blends the inorganic oxidizer salt solution, liquid organic fuel and emulsifier with sufficient shear to form an emulsion phase of these ingredients, and thus an emulsion blasting agent. As shown in Figs. 4 and 5, a preferred embodiment of the blender comprises a housing 37, having an inlet 23 at the bottom thereof and an outlet 24 at the top thereof; a vertically extending shaft 38 rotatably mounted within the housing 37; horizontal blades 39 affixed to and extending laterally from the shaft 38 and spaced apart along the axis of the shaft 38; and stators 40 mounted within the housing 37 and interposed in some or all of the spaces between the blades 39. Preferably at least five sets of blades are affixed to the shaft, and at least two sets of stators are oppositely mounted within the housing. Fig. 5 shows one set of four blades at 90° to one another. In Fig. 4, each stator is separated by three sets of blades. Preferably, the stators are rods which extend the majority of the distance between the housing and the shaft. The blades may be so angled as to counter but not impede the flow of the fluid mixture through the housing in order to increase a shearing action of the blades and stators on the fluid mixture. Other types of blenders which could be used include homogenizers, colloid mills, shear pumps, ultrasonic mixers, and various other appropriate types of mixers.

To initiate production of the emulsion phase, it is preferred that a seed emulsion phase be formed first. This can be accomplished by closing outlet 24 and introducing a fuel-rich blend of the oxidizer salt solution, liquid organic fuel and emulsifier into the blender 21. Then, the blades 39 are rotated, for example at a speed of 1000 rpm, to blend the ingredients into an emulsion phase. The formation of the emulsion phase can be detected by a marked increase in viscosity of the blend. Once the blender becomes filled with the seed emulsion phase, the blender speed generally is increased to 1800 rpm, for example, the outlet is opened, the liquid fuel flow rate is reduced to the desired level, and the blending process then can proceed continuously or intermittently as desired.

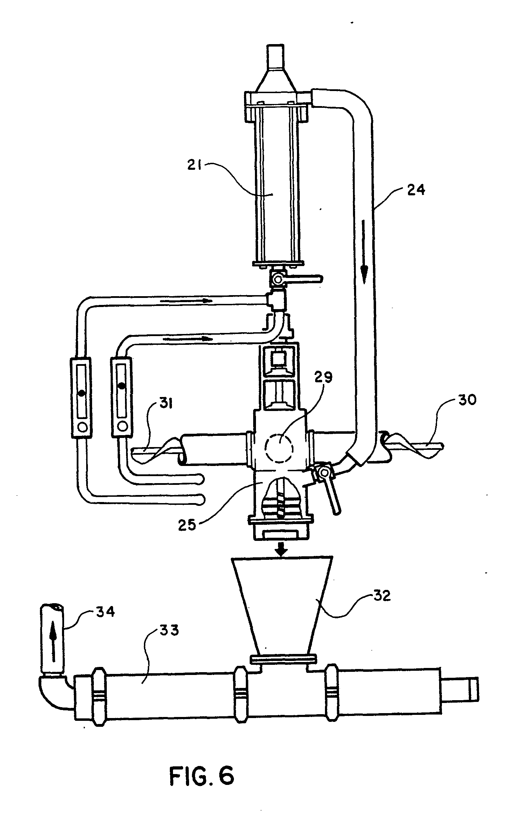

As shown in Fig. 6, the emulsion phase goes through outlet 24 and into a dries mixer 25, wherein the dry ingredients (which are optional) are added from containers 26, 27 and 28 (Figs. 2 and 3) by screw conveyors 29, 30 and 31 and then mixed uniformly throughout the emulsion phase. The dry ingredients generally include one or more particulate fuels such as aluminium granules, prilled or ground oxidizer salt, and density reducing agents such as perlite or hollow plastic or glass spheres, which, if desired, could be pre-added to the oxidizer salt solution (see, for example, US-A-4,141,767). The mixing is preferably accomplished by means of rotating blades or paddles in the dries mixer 25. The blender 21 could be adapted to also function as the dries mixer, wherein the dry, particulate ingredients would be added to the blender after formation of the emulsion phase. Thus, the blender and the mixer could be a single unit.

The completely formulated emulsion blasting agent leaves the dries mixer 25, enters pump funnel 32 and then enters delivery pump 33, which is preferably a positive displacement rotating screw pump, such as a Monoflo Mono (3—103 gpm $H_2O$ at 0 kg/cm²). The emulsion blasting agent then is pumped through conduit 34, preferably a heavy-duty rubber hose, and into a borehole or other receptacle. Preferably, the conduit 34 is reeled on reel 35 (shown in Fig. 2) so that the end of the conduit can be lowered and raised during the borehole filling process. The boom 36 can be used to position conduit 34 with respect to the borehole.

As an example of emulsion blasting agents formulated according to the above-described method and with the above-described apparatus, an emulsion of the type described in copending U.S. Serial No. 004,958 (which corresponds to: GB-A-2 042 495), containing 11 percent foil aluminium and 1.5% Microballoons (Registered Trade Mark) was formulated at a production rate of 136 kg/min. and pumped at 12 kg/cm² through a 30 m length of 5 cm diameter rubber hose. The emulsion blasting agent had a critical diameter of 38 mm at 5°C at a density of 1.26 g/cc.

The power source for all dynamic operations is preferably a hydraulic system powered by a diesel or gasoline engine. The details of such a system are not shown but are well-known by those skilled in the art. Other power means would include electrical, pneumatic and mechanical systems. All of these systems or combinations thereof could be used by those skilled in the art.

The pumps and screw conveyors can be adjusted either manually or automatically to provide the desired flow rates of the various ingredients so that the formulated emulsion blasting agent has the desired composition. This composition can be changed during the formulating process, if desired, by manually or automatically adjusting the ingredient flow rates to the desired levels at the desired times. Thus, the composition of the blasting agent can be varied from the bottom of a borehole to the top, depending on the blasting agent characteristics desired, without interrupting the formulating and delivery process. Of course the blasting agent composition can also be changed from borehole to borehole if desired. An automatic metering system is not shown but is known to those skilled in the art.

## Claims

1. An apparatus for the on-site bulk manufacture and delivery of a pumpable blasting agent, comprising:

a movable base (14) on which is housed a container (15) for an oxidizer salt solution, means (33) for delivering the blasting agent from the apparatus, and a conduit (34) through which the blasting agent can be delivered into a borehole or other receptacle, the base also housing a container (16) for a solution of emulsifier and liquid organic fuel or individual containers for each ingredient, means (22) for combining the oxidizer salt solution, emulsifier and liquid organic fuel to form a fluid mixture thereof, and a blender (21) for blending the fluid mixture of oxidizer salt solution, emulsifier and liquid organic fuel to form a water-in-oil emulsion blasting agent, characterised in that the blender comprises:

a housing (37) having an inlet (23) and an outlet (24),

a shaft (35) rotatably mounted within the housing,

a plurality of blades (39) affixed to and extending in a lateral direction from the shaft and spaced apart along the axis of the shaft,

a plurality of stators (40) rigidly mounted within the housing and interposed in some or all of the spaces between the blades, and

means for rotating the shaft and blades so as to blend the fluid mixture.

2. An apparatus according to Claim 1 further comprising at least one container (26) for a dry particulate ingredient or ingredients; means (29) for adding the dry, particulate ingredient or ingredients to the emulsion blasting agent;

and a mixer (25) for mixing the dry, particulate ingredient or ingredients throughout the emulsion.

3. An apparatus according to Claim 1, wherein the said inlet (23) is at the bottom of the housing (37) and the said outlet (24) is at the top, wherein the shaft (38) is mounted vertically within the housing and wherein the blades (39) extend horizontally from the shaft.

4. An apparatus according to Claim 3, further comprising means for forcing the fluid mixture vertically through the housing and out the outlet.

5. An apparatus according to Claim 4, wherein the blades (39) are angled so as to counter but not inhibit the flow of the fluid mixture through the housing (37) in order to increase a shearing action of the blades and stators (40) on the fluid mixture.

6. An apparatus according to any preceding Claim, wherein he movable base (14) is a self-contained, motorized vehicle.

7. Method for the manufacture and bulk delivery of water-in-oil emulsion blasting agents comprising:

forming an oxidizer salt solution at a temperature above the salt crystalization temperature combining the salt solution with a liquid organic fuel and an emulifier to form a fluid mixture thereof, blending the fluid mixture to form a water-in-oil emulsion blasting agent,

and delivering the emulsion blasting agent directly into a borehole or other receptacle, characterized in that the step of blending, includes shearing the fluid mixture with a combination of stators (40) and rotatable blades (39).

8. A method according to Claim 7 further comprising the additional steps of adding dry, particulate ingredients, as desired, to the emulsion blasting agent, and mixing the dry ingredients uniformly throughout the emulsion blasting agent.

9. A method according to Claim 7 or 8, wherein the salt solution and emulsifier are combined initially with an excess of liquid organic fuel and blended to form a seed emulsion phase and thereafter the salt solution, liquid organic fuel and emulsifier are combined in the desired proportions for the final emulsion phase.

10. A method according to Claim 7 or 8, wherein the liquid organic fuel and emulsifier first are combined into a solution which then is combined with the salt solution prior to the blending step.

11. A method according to any one of Claims 7 to 10, wherein the shearing of the fluid mixture includes the step of delivering the fluid mixture to a blender (21) comprising:

a housing (37) having an inlet (23) and an outlet, (24) a shaft (38) rotatably mounted within the housing, a plurality of blades (39) affixed to and extending in a lateral direction from the shaft and spaced apart along the axis of the shaft,

a plurality of stators (40) rigidly mounted within the housing and interposed in some or all the spaces between the blades, and

means for rotating the shaft and blades, thereby to shear the fluid mixture and form an emulsion phase.

12. A method according to any one of Claims 7 to 11, wherein all steps are accomplished on a self-contained, motorized vehicle.

13. A blender (21) which comprises:

a housing (37) having an inlet (23) and an outlet (24),

a shaft (38) rotatably mounted within the housing,

a plurality of blades (39) affixed to and extending from the shaft and spaced apart along the axis of the shaft,

a plurality of stators (40) rigidly mounted within the housing and interposed in some or all of the spaces between the blades,

and means for rotating the shaft and blades so as to blend the fluid mixture into the emulsion phase characterized in that

the inlet and outlet are at opposite ends of the housing and the blender is operable to provide a one pass continuous system, the blender being adapted for blending a fluid mixture of ingredients of a water-in-oil emulsion blasting agent into an emulsion phase.

14. A blender according to Claim 13, wherein the blades (39) are in sets that are spaced apart along the axis of the shaft (38) and the blades within each set extend radially from the shaft which thus functions as a hub for the blades.

15. A blender according to Claim 14, wherein at least five sets of blades (39) are affixed to the shaft, (38) at least two sets of stators (40) are oppositely mounted within the housing (37).

16. A blender according to Claim 14 or 15, wherein each set of blades (39) contains four blades extending radially at 90 degree angles from each other.

17. A blender according to any one of Claims 13 to 16, wherein the stators (40) are rods which extend the majority of the distance between the housing (37) and the shaft (38).

18. A blender according to any one of Claims 13 to 17, wherein the inlet (23) is at the bottom of the housing (37) and the outlet (24) is at the top, the shaft (38) is mounted vertically within the housing and the blades (39) extend horizontally from the shaft.

19. A blender according to Claim 18, further comprising means for forcing the fluid mixture vertically through the housing and out the outlet.

20. A blender according to Claim 19, wherein the blades (39) are angled so as to counter but not impede the flow of the fluid mixture through the housing (37) in order to increase a shearing action of the blades and stators (40) on the fluid mixture.

21. A blender according to Claim 19 or 20, wherein the forcing means is a pump.

**Patentansprüche**

1. Vorrichtung zur einsatzbereichsseitigen, pakkungslosen Herstellung und Abgabe eines pumpbaren Sprengstoffes mit:

einem bewegbaren Untersatz (14), auf welchem sich ein Behälter (15) für eine Oxydationssalzlösung befindet, einer Einrichtung (33) zur Abgabe der Sprengstoffe aus der Vorrichtung, sowie einer Leitung (34), durch welche der Sprengstoff in ein Bohrloch oder ein anderes Behältnis eingebbar ist, wobei der Untersatz außerdem einen Behälter (16) für die Lösung eines Emulgators und flüssigen, organischen Sprengstoffes oder individuelle Behälter für jeden Bestandteil aufnimmt, einer Einrichtung (22) zur Zusammenführung der Oxydationssalzlösung, des Emulgators und des flüssigen, organischen Brennstoffes zur Bildung eines Fluidgemisches hieraus, sowie einer Mischeinrichtung (21) zur Vermischung des Fluidgemisches aus der Oxydationssalzlösung, des Emulgators und des flüssigen, organischen Brennstoffes, unter Bildung eines Dasser-in-Öl-Emulsions-Sprengstoffes, dadurch gekennzeichnet, daß die Mischeinrichtung die folgenden Merkmale umfaßt, nämlich:

ein Gehäuse (37) mit einem Einlaß (23) sowie einem Auslaß (24),

eine Welle (35), die drehbar innerhalb des Gehäuses gehalten ist,

eine Mehrzahl von Flügeln (39), die an der Welle gehalten sind, sich in seitlicher Richtung hiervon ausgehend erstrecken und in einem Abstand voneinander entlang der Achse der Welle angeordnet sind,

eine Mehrzahl von Statoren (40), die starr in dem Gehäuse montiert sind und innerhalb einiger oder allen Abständen zwischen den Bügeln angeordnet sind, sowie

eine Einrichtung zur Drehung der Welle und der Flügel für die Vermischung des Fluidgemisches.

2. Vorrichtung nach Anspruch 1, dadurch gekennzeichnet, daß mindestens ein Behälter (26) für eine oder mehrere trockene, teilchenförmige Bestandteile, eine Einrichtung (29) zur Zugabe des trockenen, teilchenförmigen Bestandteils oder der Bestandteile zum Emulsionssprengstoff sowie ein Mischer (25) zum Einmischen des trockenen, teilchenförmigen Bestandteils oder der Bestandteile in die Emulsion vorgesehen sind.

3. Vorrichtung nach Anspruch 1, dadurch gekennzeichnet, daß sich der Einlaß (23) am Boden des Gehäuses (37) und der Auslaß (24) sich oben befindet, während die Welle (38) senkrecht innerhalb des Gehäuses angeordnet ist und sich die Flügel (39) horizontal von der Welle ausgehend erstrecken.

4. Vorrichtung nach Anspruch 3, dadurch gekennzeichnet, daß eine Einrichtung vorgesehen ist, mittels welcher das Fluidgemisch senkrecht durch das Gehäuse und aus dem Auslaß herausdrückbar ist.

5. Vorrichtung nach Anspruch 4, dadurch gekennzeichnet, daß die Flügel (39) dergestalt abgewinkelt sind, daß sie den Strom des Fluidgemisches durch das Gehäuse (27) durchkreuzen, ohne ihn zu behindern, zur Erhöhung der Scherwirkung der Flügel und Statoren (40) auf das flüssige Gemisch.

6. Vorrichtung nach irgendeinem der vorangehenden Ansprüche, dadurch gekennzeichnet, daß der fahrbare Untersatz (14) ein motorisiertes Fahrzeug ist.

7. Verfahren zur Herstellung und Abgabe pakkungsloser Waser-in-Öl-Emulsionssprengstoffe, bei welchem man:

eine Oxydationssalzlösung bei einer Temperatur oberhalb der Salzkristallisationstemperatur herstellt,

die Salzlösung mit einem flüssigen, organischen Brennstoff und einem Emulgator zusammenführt, zur Bildung eines Fluidgemisches hieraus,

das Fluidgemisch vermischt, zur Bildung eines Wasser-in-Öl-Emulsions-Sprengstoffes und

den Emulsionssprengstoff direkt in ein Bohrloch oder ein anderes Behältnis eingibt,

dadurch gekennzeichnet, daß der Schritt der Vermischung einen Schervorgang auf das Fluidgemisch umfaßt, mit einer Kombination von Statoren (40) und drehbaren Flügeln (39).

8. Verfahren nach Anspruch 7, gekennzeichnet durch die zusätzlichen Schritte, gemäß welchen man in gewünschtem Ausmaß trockene, teilchenförmige Bestandteile dem Emulsionssprengstoff beigibt und die trockenen Bestandteile gleichmäßig in den Emulsionssprengstoff einmischt.

9. Verfahren nach einem der Ansprüche 7 oder 8, dadurch gekennzeichnet, daß die Salzlösung und der Emulgator zunächst mit einem Überschuß an flüssigem, organischem Brennstoff kombiniert und unter Bildung einer Keimemulsionsphase vermischt wird, worauf die Salzlösung, der flüssige, organische Brennstoff und der Emulgator in den gewünschten Proportionen für die endgültige Emulsionsphase zusammengeführt werden.

10. Verfahren nach einem der Ansprüche 7 oder 8, dadurch gekennzeichnet, daß der flüssige, organische Brennstoff und der Emulgator zunächst in eine Lösung zusammengeführt werden, die dann mit der Salzlösung vor dem Vermischungsschritt zusammengeführt wird.

11. Verfahren nach einem der Ansprüche 7 bis 10, bei welchem der Schervorgang auf das Fluidgemisch den Schritt der Abgabe des Fluidgemisches in eine Mischeinrichtung (21) umfaßt, gekennzeichnet durch

ein Gehäuse (37) mit einem Einlaß (23) und einem Auslaß (24), einer Welle (38), die drehbar innerhalb des Gehäuses montiert ist, eine Mehrzahl von Flügel (39), die an der Welle befestigt sind und sich in seitlicher Richtung hiervon in einem Abstand entlang der Aches der Welle erstrecken,

eine Mehrzahl von Statoren (40), die starr innerhalb des Gehäuses montiert und in einigen oder allen Abständen zwischen den Flügeln angeordnet sind, sowie

eine Einrichtung zur Drehung der Welle und der Flügel, zur Übertragung einer Scherwirkung auf das Fluidgemisch und Bildung einer Emulsionsphase.

12. Verfahren nach einem der Ansprüche 7 bis 11, gemäß welchem alle Schritte auf einem unabhängigen Motorfahrzeug ausgeführt werden.

13. Eine Mischeinrichtung (21) mit:

einem Gehäuse (37), das einen Einlaß (23) und einen Auslaß (24) besitzt,

einer Welle (38), die drehbar innerhalb des Gehäuses montiert ist,

einer Mehrzahl von Flügeln (39), die an der Welle gehalten sind und sich von dieser ausgehend erstrecken, in einem Abstand entlang der Achse der Welle,

einer Mehrzahl von Statoren (40), die starr innerhalb des Gehäuses montiert und in einigen oder allen Abständen zwischen den Flügeln angeordnet sind,

einer Einrichtung zur Drehung der Welle und der Flügel, zur Mischung des Fluidgemisches in die Emulsionsphase, dadurch gekennzeichnet, daß

sich der Einlaß und der Auslaß an einander gegenüberliegenden Enden des Gehäuses befinden und die Mischeinrichtung als kontinuierliches System mit einmaligem Durchgang betreibbar ist, wobei die Mischeinrichtung ausgelegt ist zur Vermischung eines Fluidgemisches aus Bestandteilen eines Wasser-in-Öl-Emulsions-Sprengstoffes in eine Emulsionsphase.

14. Mischeinrichtung nach Anspruch 13, dadurch gekennzeichnet, daß die Flügel (39) in Gruppen angeordnet sind, die jeweils einen Abstand voneinander entlang der Achse der Welle (38) besitzen und sich die Flügel einer jeden Gruppe radial von der Welle ausgehend erstrekken, so daß diese eine Nabe für die Flügel bildet.

15. Mischeinrichtung nach Anspruch 14, dadurch gekennzeichnet, daß mindestens fünf Gruppen von Flügeln (39) an der Welle (38) befestigt sind und mindestens zwei Gruppen von Statoren (40) einander gegenüberliegend innerhalb des Gehäuses (37) montiert sind.

16. Mischeinrichtung nach einem der Ansprüche 14 oder 15, dadurch gekennzeichnet, daß jede Gruppe von Flügeln (39) vier Flügel umfaßt, die sich radial um jeweils 90° zueinander versetzt erstrecken.

17. Mischeinrichtung nach einem der Ansprüche 13 bis 16, dadurch gekennzeichnet, daß die Statoren (40) Stäbe sind, die sich über den größten Teil des Abstandes zwischen dem Gehäuse (37) und der Welle (38) erstrecken.

18. Mischeinrichtung nach einem der Ansprüche 13 bis 17, dadurch gekennzeichnet, daß sich der Einlaß (23) am Boden des Gehäuses (37) und der Auslaß (24) am oberen Ende befinden, während die Welle (38) vertikal innerhalb des Gehäuses montiert ist, und sich die Flügel (39) horizontal von der Welle ausgehend erstrecken.

19. Mischeinrichtung nach Anspruch 18, dadurch gekennzeichnet, daß eine Einrichtung vorhanden ist, mittels welcher das Fluidgemisch vertikal durch das Gehäuse und aus dem Auslaß herausdrückbar ist.

20. Mischeinrichtung nach Anspruch 19, dadurch gekennzeichnet, daß die Flügel (39) einen solchen Anstellwinkel besitzen, daß sie den Strom des Fluidgemisches durch das Gehäuse (37) durchkreuzen, ohne ihn zu behindern, zur Erhöhung der Scherwirkung der Flügel und Statoren (40) auf das Fluidgemisch.

21. Mischeinrichtung nach einem der Ansprüche 19 oder 20, dadurch gekennzeichnet, daß die Druckeinrichtung eine Pumpe ist.

**Revendications**

1. Appareil pour la production et la distribution en vrac, sur place, d'un agent explosif pompable, comprenant: une base mobile (14) sur laquelle est logé un conteneur (15) pour une solution saline comburante, des moyens (33) destinés à distribuer l'agent explosif depuis l'appareil, et un conduit (34) par lequel l'agent explosif peut être distribué dans un sondage ou autre réceptacle, la base logeant aussi un conteneur (16) pour une solution d'émulsifiant et un combustible organique liquide, ou des conteneurs individuels pour chaque ingrédient, des moyens (22) pour associer la solution saline comburante, l'émulsifiant et le combustible organique liquide afin d'en former une préparation fluide, et un malaxeur (21) destiné à malaxer la préparation fluide de solution saline comburante, d'émulsifiant et de combustible organique liquide pour former un agent explosif en émulsion eau-dans-huile, caractérisé en ce que le malaxeur comprend:

un corps (37) ayant une entrée (23) et une sortie (24),

un arbre (35) monté de façon à pouvoir tourner dans le corps,

plusieurs pales (39) fixées à l'arbre, s'étendant dans une direction latérale à partir de l'arbre et espacées le long de l'axe de l'arbre,

plusieurs aubes fixes (40) montées rigidement dans le corps et interposées dans certains ou dans la totalité des espaces entre les pales, et

des moyens destinés à faire tourner l'arbre et les pales afin de malaxer la préparation fluide.

2. Appareil selon la revendication 1, comprenant en outre au moins un conteneur (26) pour un ingrédient ou des ingrédients secs en particules; des moyens (29) destinés à additionner l'ingrédient ou les ingrédients secs, en particules, à l'agent explosif en émulsion; et un mélangeur (25) destiné à mélanger l'ingrédient ou les ingrédients secs, en particules, dans toute l'émulsion.

3. Appareil selon la revendication 1, dans lequel ladite entrée (23) est au fond du corps (37) et ladite sortie (24) est au sommet, dans lequel l'arbre (38) est monté verticalement dans le corps et dans lequel les pales (39) partent horizontalement de l'arbre.

4. Appareil selon la revendication 3, comprenant en outre des moyens destinés à forcer la préparation fluide verticalement à travers le corps et vers l'extérieur par la sortie.

5. Appareil selon la revendication 4, dans lequel les pales (39) sont inclinées de façon à résister, mais sans l'empêcher, à l'écoulement de la préparation fluide dans le corps (37) afin d'accroître une action de cisaillement des pâles et des aubes fixes (40) sur la préparation fluide.

6. Appareil selon l'une quelconque des revendications précédentes, dans lequel la base mobile (14) est un véhicule autonome à moteur.

7. Procédé pour la production et la distribution en vrac d'agents explosifs en émulsion eau-dans-huile, consistant:

à former une solution saline comburante à une température supérieure à la température de cristallisation du sel,

à associer la solution saline à un combustible organique liquide et à un émulsifiant pour en former une préparation fluide,

à malaxer la préparation fluide pour former un agent explosif en émulsion eau-dans-huile,

à distribuer l'agent explosif en émulsion directement dans un sondage ou autre réceptacle,

caractérisé en ce que l'étape de malaxage comprend un cisaillement de la préparation fluide avec un ensemble d'aubes fixes (40) et de pales tournantes (39).

8. Procédé selon la revendication 7, comprenant en outre les étapes supplémentaires qui consistent à additionner des ingrédients secs en particules, comme souhaité, à l'agent explosif en émulsion, et à mélanger uniformément les ingrédients secs dans tout l'agent explosif en émulsion.

9. Procédé selon la revendication 7 ou 8, dans lequel la solution saline et l'émulsifiant sont associés initialement avec un excédent de combustible organique liquide et sont malaxés pour former une phase émulsionnée naissante et, ensuite, la solution saline, le combustible organique liquide et l'émulsifiant sont associés dans les proportions souhaitées pour la phase émulsionnée finale.

10. Procédé selon la revendication 7 ou 8, dans lequel le combustible organique liquide et l'émulsifiant sont d'abord associés en une solution qui est ensuite associée à la solution saline avant l'étape de malaxage.

11. Procédé selon l'une quelconque des revendications 7 à 10, dans lequel le cisaillement de la préparation fluide comprend l'étape qui consiste à distribuer la préparation fluide à un malaxeur (21) comprenant:

un corps (37) ayant une entrée (23) et une sortie (24), un arbre (38) monté de façon à pouvoir tourner dans le corps, plusieurs pales (39) fixées à l'arbre, s'étendant dans une direction latérale à partir de l'arbre et espacées le long de l'axe de l'arbre,

plusieurs aubes fixes (40) montées rigidement à l'intérieur du corps et interposées dans certains ou dans la totalité des espaces entre les pales, et

des moyens destinés à faire tourner l'arbre et les pales, afin de cisailler la préparation fluide et de former une phase émulsionnée.

12. Procédé selon l'une quelconque des revendications 7 à 11, dans lequel toutes les étapes sont effectuées sur un véhicule autonome motorisé.

13. Malaxeur (21) qui comprend:

un corps (37) ayant une entrée (23) et une sortie (24),

un arbre (38) monté de façon à pouvoir tourner dans le corps,

plusieurs pales (39) fixées à l'arbre, partant de celui-ci et espacées le long de son axe,

plusieurs aubes fixes (40) montées rigidement à l'intérieur du corps et interposées dans certains ou dans la totalité des espaces entre les pales,

et des moyens destinés à faire tourner l'arbre et les pales afin de malaxer la préparation fluide pour constituer la phase émulsionnée, caractérisé en ce que

l'entrée et la sortie sont à des extrémités opposées du corps, et le malaxeur peut être mis en oeuvre pour former un système continu à passe unique, le malaxeur étant conçu pour malaxer une préparation fluide d'ingrédients d'un agent explosif en émulsion eau-dans-huile afin de former une phase émulsionnée.

14. Malaxeur selon la revendication 13, dans lequel les pales (39) forment des jeux qui sont espacés le long de l'axe de l'arbre (38), et les pales de chaque jeu partent radialement de l'arbre qui assure donc la fonction d'un moyeu pour les pales.

15. Malaxeur selon la revendication 14, dans lequel au moins cinq jeux de pales (39) sont fixés à l'arbre (38), au moins deux jeux d'aubes fixes (40) étant montés de façon opposée dans le corps (37).

16. Malaxeur selon la revendication 14 ou 15, dans lequel chaque jeu de pales (39) contient quatre pales s'étendant radialement en formant des angles de 90° entre elles.

17. Malaxeur selon l'une quelconque des revendications 13 à 16, dans lequel les aubes fixes (40) sont des tiges qui s'étendent sur la plus grande partie de la distance entre le corps (37) et l'arbre (38).

18. Malaxeur selon l'une quelconque des revendications 13 à 17, dans lequel l'entrée (23) est au fond du corps (37) et la sortie (24) est au sommet, l'arbre (38) est monté verticalement dans le corps et les pales (39) partent horizontalement de l'arbre.

19. Malaxeur selon la revendication 18, comprenant en outre des moyens destinés à forcer la préparation fluide verticalement dans le corps et vers l'extérieur par la sortie.

20. Malaxeur selon la revendication 19, dans lequel les pales (39) forment un angle de façon à résister, mais sans l'empêcher, à l'écoulement de la préparation fluide dans le corps (37) afin d'accroître une action de cisaillement des pales et des aubes fixes (40) sur la préparation fluide.

21. Malaxeur selon la revendication 19 ou 20, dans lequel les moyens de forcement comprennent une pompe.

FIG. I

FIG. 2

FIG. 3

FIG. 5

FIG. 4

FIG. 6